# EUROPÄISCHE PATENTANMELDUNG

(11) **EP 3 486 637 A1**
(43) Veröffentlichungstag der Anmeldung: **22.05.2019**
(21) Anmeldenummer: 18206680.3
(22) Anmeldetag: 16.11.2018
(51) Int. Cl.: G01N 21/33, G01N 33/18, C02F 1/00

(54) **VERFAHREN UND VORRICHTUNG ZUR DETEKTION VON FREMDSTOFFEN IN EINEM FLÜSSIGEN MEDIUM**

(30) Priorität: 16.11.2017 DE 102017220514
(71) Anmelder: Unisensor Sensorsysteme GmbH, 76149 Karlsruhe (DE)
(72) Erfinder: KRIEG, Gunther, 76227 Karlsruhe (DE); HAPPEL, Oliver, 76199 Karlsruhe (DE)
(74) Vertreter: Patent- und Rechtsanwälte Ullrich & Naumann

(57) **Zusammenfassung**

Die Erfindung betrifft Verfahren zur Detektion von Fremdstoffen, insbesondere von anthropogenen Spurenstoffen, in einem flüssigen Medium, insbesondere in Abwasser,
umfassend die Schritte
- Entnehmen einer Probe
- Zumindest teilweise Destillation der Probe,
- Analysieren des erhaltenen Kondensats mittels UV/VIS-Spektroskopie, wobei das Analysieren die folgenden Schritte umfasst:
∘ Anregen des Kondensats mit Licht, insbesondere eines Lasers, einer Xenonlampe oder einer Deuteriumlampe, mit zumindest einer Anregungswellenlänge, und
∘ Aufnehmen zumindest eines Absorptionsspektrums des durch das Kondensat transmittierten Lichts und/oder zumindest eines Fluoreszenzspektrums von remittiertem Licht des Kondensats mittels eines Detektors,

- Ermitteln von zumindest einem der Fremdstoffe in dem analysierten Kondensat anhand zumindest eines der aufgenommenen Spektren,
dadurch gekennzeichnet, dass vor dem Analysieren des Kondensats eine Aufkonzentrierung der Fremdstoffe und/oder eine weitere Anreichung der Fremdstoffe in der Probe erfolgt.

## Beschreibung

Die Erfindung betrifft ein Verfahren zur Detektion von Fremdstoffen, insbesondere von anthropogenen Spurenstoffen, in einem flüssigen Medium, insbesondere in Abwasser, Oberflächenwasser oder dergleichen.

Die Erfindung betrifft ebenfalls eine Vorrichtung zur Detektion von Fremdstoffen, insbesondere von anthropogenen Spurenstoffen, in einem flüssigen Medium, insbesondere in Abwasser, Oberflächenwasser oder dergleichen.

Die Erfindung betrifft weiter eine Vorrichtung zur kontinuierlichen Reinigung von Abwässern, insbesondere in Klärwerken.

Die Erfindung betrifft weiter ein Verfahren zur kontinuierlichen Reinigung von Abwässern, insbesondere in Klärwerken.

Obwohl auf beliebige flüssige Medien anwendbar, wird die vorliegende Erfindung in Bezug auf Abwasser als flüssiges Medium beschrieben.

Unter dem Begriff Fremdstoffe im Sinne der Erfindung sind insbesondere in der Beschreibung, vorzugsweise in den Ansprüchen endokrine Wirkstoffe, Pflanzenschutzmittel, Körperpflegestoffe, Industriechemikalien und/oder Pharmazeutika, Spurenstoffe wie Biozide, Korrosionsschutzmittel, Röntgenkontrastmittel, Pharmaka und dergleichen zu verstehen. Unter dem Begriff Pflanzenschutzmittel sind insbesondere in der Beschreibung, vorzugsweise in den Ansprüchen Herbizide, Fungizide und/oder Insektizide zu verstehen. Unter dem Begriff endokriner Wirkstoff sind insbesondere in der Beschreibung, vorzugsweise in den Ansprüchen, Hormone zu verstehen. Unter flüssigem Medium ist insbesondere in der Beschreibung, vorzugsweise in den Ansprüchen Oberflächenwasser, Flusswasser, Trinkwasser oder Abwasser zu verstehen. Schadstoffe im Sinne der Erfindung sind insbesondere in der Beschreibung, vorzugsweise in den Ansprüchen, Stoffe oder Stoffgemische, die schädlich für Menschen, Tiere und/oder Pflanzen sind. Hierunter fallen insbesondere natürliche und/oder anthropogene Schadstoffe.

Trinkwasser ist eines der wichtigsten Lebensmittel. Um dieses in ausreichendem Maß bereitzustellen ist es notwendig, Abwässer, die durch Schadstoffe oder Spurenstoffe verunreinigt sind, zu reinigen. So führt beispielsweise der Eintrag von Hormonen aus geklärtem Abwasser in Oberflächengewässer zu einer Verweiblichung der Fischbestände, was deren Populationen schrumpfen lässt.

Um komplexere Verbindungen feststellen zu können, sind selektive Analysetechniken bekannt geworden: Um organische Verbindungen nachweisen zu können, sind beispielsweise gaschromatographische oder flüssigkeitschromatographische Methoden in Kopplung mit spektroskopischer oder massenspektroskopischer Detektion bekannt geworden. Um Metalle nachweisen zu können kann Massenspektrometrie mit induktiv gekoppeltem Plasma (ICP-MS) verwendet werden. Diese genannten Methoden erlauben zwar eine spezifische Detektion und Quantifizierung der genannten Fremd- und Schadstoffe mit gewünschter Genauigkeit. Nachteilig ist jedoch, dass diese sowohl einen großen personellen und instrumentellen Aufwand erfordern. Darüber hinaus ist auch der zeitliche Aufwand hoch. So können aufgrund des entsprechenden Aufwandes und der damit verbundenen Kosten nur längerfristige Trends des Fremd- und/oder Schadstoffgehalts im Trinkwasser aufgedeckt werden. Bei einer unentdeckten Leckage, beispielsweise von Betriebsstoffen, wie Öl, etc. ins Wasser, kann dieses lange Zeit unbemerkt bleiben, obwohl eine eventuell kritische Kontamination des Trinkwassers mit dem jeweiligen Fremdstoff auftritt. Aus der EP 2 786 126 B1 ist eine Vorrichtung und ein Verfahren zur Bestimmung von Schadstoffen in Trinkwasser bekannt geworden.

Weiter ist zur groben Bestimmung von Schadstoffen, insbesondere der Belastung von Wasser mit natürlichen oder anthropogenen organischen Verbindungen die Lichtschwächung in Abwasser bei einer Schichtdicke von 1 cm, den sog. SAK₂₅₄-Wert also die Lichtschwächung durch die Probe bei einer Wellenlänge von 254nm zu bestimmen. Die entsprechende Lichtschwächung bzw. optische Absorption bei 254nm ermöglicht eine kumulierte Bestimmung von organischen Belastungen wie Lignine oder Humine. Nachteilig dabei ist wiederum, dass lediglich summarisch ein grobes Maß für ein bestimmte Klasse von organischen Verbindungen im Abwasser bereitgestellt wird. Gehalte der einzelnen anthropogenen Stoffe sind nicht ermittelbar.

Um die genannten Spurenstoffe aus dem Abwasser herauszufiltern, ist es bekannt geworden, dem, insbesondere bereits teilweise gereinigten Abwasser konstante Mengen an Aktivkohle, insbesondere in Form von Pulveraktivkohle, zu dosieren, sodass die Schad- bzw. Spurenstoffe daran adsorbiert werden und sich als Klärschlamm absetzen. Dieser wird anschließend bei hohen Temperaturen in Müllverbrennungsanlagen verbrannt. Über das Jahr als auch innerhalb eines Tages hinweg schwanken jedoch die Konzentrationen von Spurenstoffen, bspw. Benzotriazol oder Diclofenac, erheblich, was dann zu einem ineffizienten Einsatz der Aktivkohle und damit hohen Kosten führt.

Eine Aufgabe der vorliegenden Erfindung ist es daher, ein Verfahren und eine Vorrichtung anzugeben, welche eine kostengünstige und kontinuierliche Überwachung von Fremdstoffen in einem flüssigen Medium ermöglicht. Eine weitere Aufgabe der vorliegenden Erfindung ist es, ein Verfahren und eine Vorrichtung anzugeben, welche den personellen und instrumentellen Aufwand der Abwasserreinigung und - überwachung senkt und gleichzeitig zuverlässig ist. Eine weitere Aufgabe der vorliegenden Erfindung ist schließlich, eine Vorrichtung und ein Verfahren anzugeben, welches eine Vielzahl von verschiedenen Fremdstoffen in einem flüssigen Medium mit ausreichender Genauigkeit erkennt. Eine weitere Aufgabe ist es, ein effizientes und kostengünstiges Verfahren und eine entsprechende Vorrichtung zur Entfernung von Schad- oder Spurenstoffen aus einem flüssigen Medium, wie bspw. Abwasser bereitzustellen.

Die vorliegende Erfindung löst zumindest eine der Aufgaben mit einem Verfahren zur Detektion von Fremdstoffen, insbesondere von anthropogenen Spurenstoffen, in einem flüssigen Medium, insbesondere in Abwasser,
umfassend die Schritte
- Entnehmen einer Probe
- Zumindest teilweise Destillation der Probe,
- Analysieren des erhaltenen Kondensats mittels UV/VIS-Spektroskopie, wobei das Analysieren die folgenden Schritte umfasst:
   ∘ Anregen des Kondensats mit Licht, insbesondere eines Lasers, einer Xenonlampe oder einer Deuteriumlampe, mit zumindest einer Anregungswellenlänge, und
   ∘ Aufnehmen zumindest eines Absorptionsspektrums des durch das Kondensat transmittierten Lichts und/oder zumindest eines Fluoreszenzspektrums von remittiertem Licht des Kondensats mittels eines Detektors,
- Ermitteln von zumindest einem der Fremdstoffe in dem analysierten Kondensat anhand zumindest eines der aufgenommenen Spektren, dadurch gekennzeichnet, dass vor dem Analysieren des Kondensats eine Aufkonzentrierung der Fremdstoffe und/oder eine weitere Anreichung der Fremdstoffe in der Probe erfolgt.

Die vorliegende Erfindung löst zumindest eine der Aufgaben ebenfalls mit einer Vorrichtung zur Detektion von Fremdstoffen, insbesondere von anthropogenen Spurenstoffen, in einem flüssigen Medium, insbesondere in Abwasser, umfassend
eine Destillationseinrichtung zum zumindest teilweisen Destillieren einer Probe umfasst,
eine Analysiereinrichtung zum Analysieren des erhaltenen Kondensats mittels UV/VIS-Spektroskopie, wobei die Analysiereinrichtung zumindest eine Lichtquelle, insbesondere einen Laser, eine Xenonlampe oder einer Deuteriumlampe, zum Anregen des Kondensats mit Licht mit zumindest einer Anregungswellenlänge umfasst und einen Detektor zum Aufnehmen zumindest eines Absorptionsspektrums des durch das Kondensat transmittierten Lichts und/oder zumindest eines Fluoreszenzspektrums von remittiertem Licht des Kondensats, sowie
eine Ermittlungseinrichtung zum Ermitteln zumindest eines der Fremdstoffe in dem Kondensat anhand zumindest eines der aufgenommenen Spektren und weiter
eine Aufkonzentriereinrichtung zur Aufkonzentrierung der Fremdstoffe in der Probe
und/oder
eine Anreichungseinrichtung zur weiteren Anreichung der Fremdstoffe in der Probe erfolgt.

Die vorliegende Erfindung löst zumindest eine der Aufgaben ebenfalls mit einem Verfahren zur kontinuierlichen Reinigung von Abwässern, insbesondere in Klärwerken, umfassend die zumindest zeitweise kontinuierlich durchgeführten Schritte
- Durchführen eines Verfahrens gemäß einem der Ansprüche 1-15 zur Bestimmung der Konzentration von einem oder mehreren Fremdstoffen,
- Ermitteln des jeweiligen Bedarfs eines Reinigungsmittels, insbesondere in Form eines Adsorptionsmittels, vorzugsweise Aktivkohle und/oder in Form eines Oxidationsmittels, vorzugsweise Ozon, für den jeweiligen Fremdstoff,
- Zuführen der ermittelten Menge des Reinigungsmittels,

Die vorliegende Erfindung löst die Aufgaben ebenfalls mit einer Vorrichtung zur kontinuierlichen Reinigung von Abwässern, insbesondere in Klärwerken, umfassend
- eine Detektionseinrichtung zur Detektion von Fremdstoffen, insbesondere von anthropogenen Spurenstoffen, in einem flüssigen Medium, insbesondere in Abwasser gemäß einem der Ansprüche 16-21,
- eine Reinigungsmittelbereitstellungseinrichtung zur Bereitstellung eines Reinigungsmittels für einen oder mehrere Fremdstoffe,
- eine Auswerteeinrichtung, die mit der Detektionseinrichtung verbunden ist, zum kontinuierlichen Ermitteln des jeweiligen Bedarfs des Reinigungsmittels, insbesondere in Form eines Adsorptionsmittels, vorzugsweise Aktivkohle und/oder in Form eines Oxidationsmittels, vorzugsweise Ozon, für den jeweiligen Fremdstoff,
- eine Zuführeinrichtung zum Zuführen der ermittelten Menge des Reinigungsmittels zum Abwasser und
- eine Steuereinrichtung, die mit der Auswerteeinrichtung verbunden ist und die ausgebildet ist, den ermittelten Bedarf an Reinigungsmittel aus der Reinigungsmittelbereitstellungseinrichtung mittels der Zuführeinrichtung dem Abwasser zuzuführen.

Unter dem Begriff "Detektor" ist ebenfalls eine Vielzahl von einzelnen Detektoren, insbesondere ein Detektorarray oder dergleichen zu verstehen.

Einer der damit erzielten Vorteile ist, dass insbesondere mittels der spektroskopischen Analyse einer aufkonzentrierten und/oder angereicherten Probe eine äußerst zuverlässige Ermittlung von Spurenstoffen, insbesondere in Abwasser ermöglicht wird. Gleichzeitig kann durch die spektroskopische Analyse auch aufgrund der charakteristischen Linien der jeweiligen Fremdstoffe in den aufgenommenen Spektren eine Vielzahl möglicher Fremdstoffe bspw. in Abwasser bestimmt und zuverlässig unterschieden werden. Ebenso ermöglicht das Verfahren bzw. die Vorrichtung gemäß dem Anspruch 1, 16, 22 und 24 eine im Wesentlichen kontinuierliche Überwachung der von Spurenstoffen, da sowohl der zeitliche Aufwand als auch der Material- und Personalaufwand deutlich gesenkt werden. Aufwendige Laboranalysen sind nicht mehr notwendig. Darüber hinaus sind eine genaue Dosierung und Zugabe von Adsorptionsmitteln möglich, was einerseits einen wohldosierten Einsatz, andererseits erhebliche Kosten spart.

Weitere vorteilhafte Ausführungsformen, Merkmale und Vorteile der Erfindung sind in den Unteransprüchen beschrieben.

Vorteilhafterweise umfasst das Ermitteln von zumindest einem der Fremdstoffe die Verwendung von Multivariaten Kalibrationsmethoden, chemometrischen Methoden und/oder einen Vergleich der aufgenommenen Spektren mit Referenzspektren, insbesondere wobei die multivariate Kalibration mittels der Teilweisen-Kleinste-Quadrate-Regression durchgeführt wird.

Unter multivariater Kalibration ist in der Beschreibung, insbesondere in den Ansprüchen beispielsweise die sogenannte "multiple linear regression" (MLR) oder die "principal component regression" (PCR) sowie die Teilweise-Kleinste-Quadrate-Regression oder "partial least squares" (PLS)-Regression zu verstehen.

Multivariate Kalibration hat gegen über einer univariaten Kalibration unter anderem den Vorteil, dass auch Mischungen von mehreren Spurenstoffen in dem flüssigen Medium zuverlässig ermittelt werden können. Der Vergleich der aufgenommenen Spektren mit Referenzspektren hat unter anderem den Vorteil, dass die Referenzspektren lediglich einmalig aufgenommen und hinterlegt werden müssen, um diese dann mit dem aufgenommenen Spektrum vergleichen zu können. Der Vergleich zwischen den aufgenommenen Spektren und den Referenzspektren kann dabei beispielsweise anhand der Positionen der Maxima und Minima auf der Wellenlängenskala, den Halbwertsbreiten, d. h. den Wellenlängenintervallen auf halber Höhe, den Fußbreiten, d. h. den Wellenlängenintervallen, innerhalb derer ein Spektrum vorliegt, den Amplitudenverhältnissen der vorliegenden Maxima, den Amplitudenverhältnissen der vorliegenden Minima, und/oder den Amplitudenverhältnissen von Maxima und Minima erfolgen. Die einzelnen verglichenen Werte können gewichtet werden und so die jeweiligen Spurenstoffe dann zuverlässig ermittelt werden. Ein hierzu notwendiger Rechenaufwand zur Berechnung der jeweiligen Werte, etc., der in der entsprechenden Vorrichtung durchgeführt wird, ermöglicht eine zeitnahe und zuverlässige Ermittlung der Spurenstoffe in dem flüssigen Medium anhand des Vergleichs zwischen Referenzspektren und aufgenommenen Spektren.

Zweckmäßigerweise wird die multivariate Kalibration mittels der Teilweisen-Kleinste-Quadrate-Regression durchgeführt. Die als auch partial least squares (PLS-Regression) bekannte Regression ermöglicht ein besonders zuverlässiges Ermitteln von unterschiedlichen Spurenstoffen anhand des oder der aufgenommenen Spektren.

Vorteilhafterweise umfasst das Ermitteln von zumindest einem der Fremdstoffe die folgenden Schritte umfasst:
a) Identifizieren zumindest eines der Fremdstoffe anhand seines Absorptions- und/oder Fluoreszenzspektrums,
b) Identifizieren von zumindest einem für den Fremdstoff charakteristischen Wellenlängenabschnitt im Absorptions- und/oder Fluoreszenzspektrum,
c) Minimieren der Differenz der Absorptionswerte und/oder Intensitätswerte von identifiziertem Wellenlängenabschnitt und Absorptionswerten und/oder Intensitätswerten im gleichen Wellenlängenabschnitt im Referenzspektrum für unterschiedliche Konzentrationen des Fremdstoffs.

Vorteil hiervon ist, dass eine aufwendige Berechnung zur Identifikation der Fremdstoffe entfällt und gleichzeitig eine hohe Genauigkeit bei der Bestimmung der Fremdstoffe ermöglicht wird.

Zweckmäßigerweise werden zum Ermitteln eines zweiten Fremdstoffs die Schritte a)-c) erneut durchgeführt, wobei in den Schritten b) und c) das um die Absorptions- und/oder Intensitätswerte des ersten identifizierten Fremdstoff bereinigte Absorptions- und/oder Fluoreszenzspektrum verwendet wird. Damit werden auf einfache und gleichzeitig zuverlässige Weise durch sukzessive Eliminierung von ermittelten Spurenstoffen aus dem Spektrum sämtliche Spurenstoffe identifiziert. Ein solches Verfahren hat den weiteren Vorteil, dass dieses einfach zu implementieren ist. Zweckmäßigerweise wird die Destillation in Form einer Vakuum-Destillation oder einer Überdruck-Destillation durchgeführt. Die Vakuumdestillation bietet den Vorteil, dass insbesondere bei einem flüssigen Medium in Form von Trinkwasser die Kalkbildung, insbesondere in einem Verdampfer, reduziert werden kann, wohingegen bei der Überdruck-Destillation eine erhöhte Anreicherung von Fremdstoffen in Form von Pestiziden im Vergleich zur Destillation bei Umgebungsdruck oder bei der Vakuum-Destillation ermöglicht wird.

Vorteilhafterweise erfolgt die Aufkonzentrierung durch Entfernen von Wasser aus der Probe, insbesondere durch Verdampfen von Wasser. Dies ermöglicht eine einfache Aufkonzentrierung der Fremdstoffe.

Zweckmäßigerweise erfolgt die Anreichung der Fremdstoffe mittels Lösungsmittel basierter Festphasenextraktion. Einer der mit der Lösungsmittel-basierten Festphasenextraktion erzielten Vorteile ist eine Anreicherung der gesuchten Spurenstoffe und eine Abreicherung störender Stoffe aus dem gewonnenen Destillat bzw. Kondensat. Die Durchführung der genannten Festphasenextraktion wird insbesondere mittels entsprechender Kartuschen durchgeführt. Materialien allgemein für die Festphasenextraktion umfassen modifiziertes Siliziumdioxid und/oder Zirkondioxid, Kohlenstoffmodifikationen, etc.

Vorteilhafterweise erfolgt die Anreichung der Fremdstoffe mittels Festphasenextraktion mit subkritischem Wasser bei erhöhter Temperatur. Unter erhöhter Temperatur ist eine Temperatur oberhalb des Siedepunkts von Wasser unter Normalbedingungen zu verstehen. Einer der damit erzielten Vorteile ist, dass kein Verbrauchsmaterial bei reinem Wasser, insbesondere kein Lösungsmittel benötigt wird. Ein weiterer Vorteil ist die erhöhte Flexibilität: Mit Wasser kann im Gegensatz zu Lösungsmitteln bis hinunter von 190 nm gemessen werden. Lösungsmittel zeigen ggf. schneller eine Absorption im UV-C-Bereich.

Zweckmäßigerweise erfolgt die Anreicherung mittels einer temperaturgestuften Festphasenextraktion. Auf diese Weise kann die Spezifizität erhöht werden, falls beispielsweise im Spektrum die Adsorptionskurven nicht eindeutig unterschieden werden können.

Vorteilhafterweise erfolgt die Aufkonzentrierung vor und/oder die Anreichung nach der zumindest teilwesen Destillation. Damit können Fremdstoffe auf besonders einfache und zuverlässige Weise in der jeweils prozessierten Probe mit erhöhter Konzentration bereitgestellt werden. Weitere Vorteile insbesondere bei einer Anreichung mittels einer Festphasenextraktion sind unter anderem
- Keine typischen Matrixbelastungen des Festphasenextraktionsmaterials, da nach der Destillation destilliertes Wasser vorliegt und Trübstoffe, Huminstoffe und Mikroorganismen über die Destillation abgetrennt worden sind. Im Destillat sind nur flüchtige organische Spurenstoffe enthalten.
- Höhere Wiederfindungen, da destilliertes Wasser ohne Konkurrenz der Wassermatrix.
- Bedeutend längere Standzeiten, da destilliertes Wasser ohne Matrix.
- Hohe Flexibilität, da zur Lösungsmittel basierten Elution, z.B. Methanol, Ethanol, Acetonitril, Dichlormethan, Pentan und Lösungen mit spezieller der pH-Anpassung (basisch, neutral, sauer) oder Salzzusammensetzung (= lonentausch) zur Elution verwendet werden können.
- Nutzung von Festphasenextraktionsmaterialien auf Polymer-, Siliziumdioxid und Kohlenstoffbasis.
- Nutzung von Festphasenextraktionsmaterialien mit funktionalisierten Oberflächen.

Zweckmäßigerweise wird zum Analysieren des Kondensats eine Flüssigkeits-Hohlleiter-Kapillarzelle verwendet, insbesondere wobei die Flüssigkeits-Hohlleiter-Kapillarzelle auf ihrer Innenseite mit einer hydrophilen Schicht versehen ist. Vorteile einer Flüssigkeits-Hohlleiter-Kapillarzelle sind ein geringes Probevolumen, eine größere Lichtausbeute auf einem Detektor, stabilere, zuverlässigere Messungen und bei Anordnung einer hydrophilen Schicht, eine Vermeidung von Bläschenbildung in der Kapillarzelle, was ebenfalls eine zuverlässigere Bestimmung von Fremdstoffen ermöglicht.

Vorteilhafterweise wird das Absorptions- und/oder Fluoreszenzspektrum in einem Wellenlängenbereich zwischen 50 nm und 1500 nm, vorzugsweise zwischen 100 nm und 1200 nm, insbesondere zwischen 200 nm und 1050 nm, besonders vorzugsweise zwischen 200nm und 400nm aufgenommen. Der damit erzielte Vorteil ist, dass in dem Wellenlängenbereich insbesondere Moleküle mit Doppelbindungen und aromatische Moleküle absorbieren und somit anhand von Absorptionsspektren zuverlässig detektierbar bzw. ermittelbar sind. Auf diese Weise können zuverlässig insbesondere Biozide, Röntgenkontrastmittel, Korrosionsschutzmittel und Hormone sowie polyzyklische aromatische Kohlenwasserstoffe, also beispielsweise Stoffe mit mehreren Benzolringen, als Spurenstoffe detektiert werden. Darüber hinaus können auch konjugierte Doppelbindungen sowie Carbonyle und andere funktionelle Gruppen analysiert und die entsprechenden Gruppen detektiert werden, was die Ermittlung des zumindest einen Fremdstoffs weiter verbessert.

Vorteilhafterweise erfolgt eine Anregung des Kondensats in einem Wellenlängenbereich zwischen 50 nm und 600 nm, insbesondere zwischen 100 nm und 500 nm, vorzugsweise zwischen 150 nm und 400 nm. Damit ist es möglich, eine Anregung insbesondere für Spurenstoffe zu ermöglichen, welche im Abwasser, wie beispielsweise Pestizide, etc. regelmäßig vorkommen, so dass ein aussagekräftiges Spektrum für die Absorptionsspektroskopie zur Analyse und Erkennung der Fremdstoffe in der Probe erhalten werden kann.

Vorteilhafterweise wird die Destillation der Probe mittels fraktionierter Destillation durchgeführt. Einer der damit erzielten Vorteile ist, dass auf einfache und zuverlässige Weise Verbindungen, die sich in ihren Siedepunkten unterscheiden, weiter getrennt werden. Beispiel ist die Trennung von Methanol, Ethanol und Wasser bei der Brandweingewinnung.

Zweckmäßigerweise wird die fraktionierte Destillation pH-angepasst durchgeführt. Vorteile hiervon sind sowohl eine verbesserte Genauigkeit, eine verbesserte Nachweisgrenze von Verbindungen als auch eine Verbesserung der Selektivität der Detektion.

Vorteilhafterweise ist bei einer Vorrichtung gemäß Anspruch 16 eine Entnahmevorrichtung zum Entnehmen einer Probe aus dem zu untersuchenden flüssigen Medium angeordnet. Der damit erzielte Vorteil ist, dass damit insbesondere automatisiert und periodisch, beispielsweise im Falle des Abwassers aus einer Leitung, eine Probe im Wesentlichen kontinuierlich der Vorrichtung zugeführt werden kann und die so entnommene Probe regelmäßig und automatisiert auf Fremdstoffe untersucht werden kann.

Zweckmäßigerweise ist eine Hilfsmittelzusatzeinrichtung zum Säuern, Alkalisieren und/oder Neutralisieren der Probe angeordnet. Für eine zuverlässige Probenaufbereitung, insbesondere Destillation, ist insbesondere wenn die Fremdstoffe in Form von organischen Verbindungen oder Molekülen vorliegen, eine möglichst hohe Flüchtigkeit von Vorteil. Falls diese organischen Moleküle in ionischer Form vorliegen, und sich in eine ungeladene Molekülform überführen lassen, steigt deren Flüchtigkeit im flüssigen Medium an, was die Destillation und damit die Aufbereitung der entnommenen Probe wesentlich verbessert. Hier sind insbesondere saure Proben mit einem pH-Wert von 3 oder weniger von Vorteil.

Zweckmäßigerweise umfasst die Analyseeinrichtung eine optische Messzelle, welche in Form einer eine Flüssigkeits-Hohlleiter-Kapillarzelle ausgebildet ist, insbesondere wobei die Flüssigkeits-Hohlleiter-Kapillarzelle auf ihrer Innenseite mit einer hydrophilen Schicht versehen ist. Als Flüssigkeits-Hohlleiter-Kapillarzellen werden insbesondere faseroptische Durchflusszellen bezeichnet, die eine erhöhte optische Weglänge insbesondere zwischen 10 cm und 500 cm bei gleichzeitig kleinen benötigten Probenvolumina zwischen ca. 2 Mikroliter und ca. 3 Milliliter aufweisen.

Vorteilhafterweise weist die Flüssigkeits-Hohlleiter-Kapillarzelle ein Glasrohr, insbesondere ein Quarzglasrohr auf, welches auf der Außenseite mit einem Polymer beschichtet ist, wobei das Polymer einen niedrigeren Brechungsindex als Wasser aufweist. Vorteil hierbei ist, dass die Intensität des Lichts auf einem nachfolgend genannten Detektor erhöht wird. Es können damit größere Messstrecken realisiert werden, was die Messgenauigkeit erhöht. Auf der Innenseite kann das Quarzglasrohr mit einer hydrophilen Beschichtung, insbesondere mit Nanopartikeln versehen sein, was den Durchfluss erhöht und der Bildung von Luftblasen entgegenwirkt, sodass die Zuverlässigkeit einer Messung erhöht wird.

Zweckmäßigerweise ist die optische Messzelle aus Quarz und/oder Edelstahl hergestellt. Einer der damit erzielten Vorteile ist, dass damit eine zuverlässige und gleichzeitig kostengünstige Analysevorrichtung mit optischer Messzelle zur Verfügung gestellt werden kann.

Vorteilhafterweise ist eine Steuereinrichtung zum Steuern der Vorrichtung angeordnet. Die Steuervorrichtung ermöglicht eine automatisierte und prozessgesteuerte Durchführung insbesondere des Verfahrens gemäß einem der Ansprüche 1 bis 11 oder 17 und/oder mittels der Vorrichtung gemäß einem der Ansprüche 12 bis 16 oder 18.

Weitere wichtige Merkmale und Vorteile der Erfindung ergeben sich aus den Unteransprüchen, aus den Zeichnungen, und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigen jeweils in schematischer Form
- Fig. 1: eine Vorrichtung gemäß einer ersten Ausführungsform der vorliegenden Erfindung;
- Fig. 2: Schritte eines Verfahrens gemäß einer zweiten Ausführungsform der vorliegenden Erfindung;
- Fig. 3: Absorptionsspektren von Benzotriazol in doppelt destilliertem Wasser;
- Fig. 4: einen Teil von Schritten gemäß einer Ausführungsform der vorliegenden Erfindung.

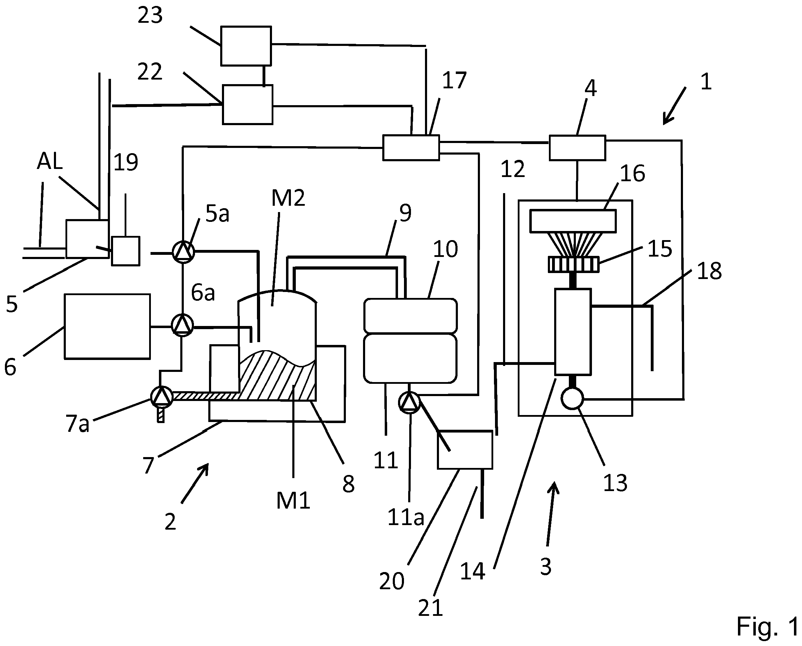

Fig. 1 zeigt eine Vorrichtung gemäß einer ersten Ausführungsform der vorliegenden Erfindung.

In Fig. 1 bezeichnet Bezugszeichen 1 eine Vorrichtung zur Detektion von anthropogenen Spurenstoffen in Abwasser. Die Vorrichtung 1 umfasst dabei eine Aufbereitungseinrichtung 2 und eine Analyseeinrichtung 3. Die Aufbereitungseinrichtung 2 umfasst einen Behälter 8 der mittels einer Heizung 7 erwärmt werden kann. In dem Behälter 8 befindet sich eine Probe des zu analysierenden Abwassers M hinsichtlich vorhandener anthropogener Spurenstoffen. Das Abwasser M liegt dabei in Behälter 8 teilweise in flüssiger Form M1 vor und teilweise in der Gasphase M2. Weiterhin ist eine Entnahmeeinrichtung 5 angeordnet, welche eine Probe aus einer Abwasserleitung AL entnehmen kann. Die Entnahmeeinrichtung 5 ist mit einer Konzentriereinrichtung 19 verbunden, bei der hier ein Teil des Abwassers, insbesondere durch Verdampfen entfernt wird und die Spurenstoffe damit aufkonzentriert werden. Mittels einer Pumpe 5a wird das Konzentrat in den Behälter 8 gefördert. Um die im Behälter 8 befindliche Probe des Konzentrats dann weiter aufbereiten zu können, kann ein Hilfsmittelreservoir 6 vorgesehen werden, welches Hilfsmittel über eine Pumpe 6a in den Behälter 8 fördern kann, so dass das Hilfsmittel mit dem Konzentrat vermischt werden kann. Hierfür können entsprechende Vermischungseinrichtungen, wie Rührer, etc. ebenfalls angeordnet sein. Das Konzentrat wird dann mittels der Heizung 7 erhitzt, so dass ein Teil des Konzentrats verdampft (Bezugszeichen M2).

Über eine Pumpe 7a, die über Leitungen mit dem Behälter 8 verbunden ist, kann der nicht verdampfte und nicht mehr benötigte Rest des Konzentrats später entsorgt werden. Das verdampfte flüssige Konzentrat M2 wird über eine Leitung 9 einem Kühler 10 zugeführt, in dem dieses wiederum kondensiert.

Im Detail kann die Destillation in Form einer fraktionierten Destillation durchgeführt werden:
Liegt eine leichtflüchtige Verbindung in Wasser vor, z.B. Nitrobenzol, Ethanol, Toluol, erfolgt der Übergang in die Gasphase im Prozess der Destillation bereits am Anfang des Prozesses. Wird beispielsweise von 100 mL Ausgangsmenge die erste Faktion von 20 mL Destillat verwendet und befindet sich die leicht flüchtige Substanz nahezu quantitativ in dieser Fraktion, so kann hierüber eine 5-fache Anreicherung der Zielsubstanz realisiert werden.

Liegt eine schwerflüchtige Verbindung in Wasser vor, liegt also der Siedepunkt einer Verbindung deutlich höher als der von Wasser, z.B. Benzotriazol mit 350 C, geht nur ein geringer relativer Anteil der Verbindung im Prozess der Destillation in die Gasphase. Als Beispiel wird nun im Folgenden für schwerflüchtige Verbindungen angenommen, dass das Phasenverhältnis zwischen wässriger Phase und Gasphase 1:100 beträgt. D.h. es liegt 1 % des in der wässrigen Phase gelösten Anteils in der Gasphase vor. Werden 100 mL einer Probe mit einem Gehalt von z.B. 10 µg/L fraktioniert destilliert, befinden sich in der ersten Destillat-Fraktion rund 0,1 µg/L. Wird der Prozess der fraktionierten Destillation weiter fortgeführt, reduziert sich die Wassermenge in einem Vorlagekolben immer mehr. Hierüber kommt es zu einer Aufkonzentration der Stoffe in einer Vorlage. Da relativ immer nur 1% der Substanz in die Gasphase gehen, verbleibt der größte Teil der schwerflüchtigen Substanz in der Vorlage. Ist das Volumen in der Vorlage schließlich auf 10 mL Restvolumen reduziert, liegt der Substanzgehalt knapp 10-fach höher vor, d.h. 100 µg/L unter der Annahme, dass im Prozess der Aufkonzentration nichts in das Destillat gegangen ist. Werden nun von dieser Fraktion wenige Milliliter für die spektroskopische Bestimmung destilliert, liegen knapp 1 µg/L im Destillat vor. Somit kann über diesen Prozess der Probenvorbereitung ein knapp 10-fach höherer Gehalt der Zielsubstanz in der Destillatfraktion realisiert werden, der dann zur spektroskopischen Messung verwendet wird.

Wie soeben beschrieben geht im Verlauf der fraktionierten Destillation schwerflüchtiger Verbindungen ein gewisser Anteil in den ersten Fraktionen verloren. Im o.g. Beispiel war es jeweils 1 % vom aktuellen Gehalt. Über den Einsatz von Hilfsreagenzien kann ein vorzeitiger Übergang in die Gasphase verhindert werden. Durch Dosieren von z.B. Säuren, wie Schwefelsäure, Salzsäure, Amidosulfonsäure, Citronensäure, etc. oder Basen wie Natronlauge, Kalilauge, Ammoniak oder dergleichen können die pH-Werte in der Probe so verändert werden, dass zum Zeitpunkt der ersten Destillat-Fraktionen die Zielsubstanzen in ionischer Form vorliegen. (z.B. protoniert bei basischen Verbindungen oder deprotoniert bei sauren Verbindungen). Über diese Maßnahme können Wasserproben 10-fach aufkonzentriert werden, z.B. Destillation von 90 mL einer 100 mL Wasserprobe). Nach diesem ersten Prozessschritt wird über die Dosierung eines geeigneten Hilfsreagenzes, z.B. Base oder Säure, die Verbindung in eine unpolare Form gebracht. In dieser Form ist die Zielsubstanz wieder flüchtig und kann in das Destillat gehen.

Für das oben genannte Beispiel geht über diese Variante keine Zielsubstanz während der Destillation der ersten Fraktionen verloren. Unter angepassten pH-Bedingungen können z.B. 90 mL ohne Substanzverlust destilliert werden. Über dieses Verfahren kann die Wiederfindung der Zielsubstanz verbessert werden.

Auch zum Nachweis von leichtflüchtigen Substanzen kann über eine pH-angepasste Destillation die Wiederfindung verbessert werden. Sofern sich hier die Zielsubstanz zunächst über pH-Anpassung in ionische Form bringen lässt, kann die Gesamtwassermenge reduziert werden. Am Ende der Destillation kann über die erneute pH-Anpassung dann die Substanz in ihre flüchtige Form gebracht werden. Da dann der Substanzgehalt z.B. 10-fach höher liegt, kann auch im Destillat eine deutlich höhere Konzentration im Destillat erzielt werden.

Zur weiteren Selektivitätssteigerung kann zusätzlich die pH-angepasste fraktionierte Destillation verwendet werden. Als Erläuterungsbeispiel wird eine Mischung aus den drei Komponenten Toluol, Phenol und Anilin angenommen. Dabei verhalten sich die Komponenten folgendermaßen:
Toluol = im gesamten pH-Bereich ungeladen und flüchtig (pH 2 bis pH 12)
Phenol = im basischen Bereich nichtflüchtig; im sauren Bereich flüchtig
Anilin = im Sauren nichtflüchtig; im alkalischen Bereich flüchtig

Während Toluol als leichtflüchtige Verbindung bei allen pH-Werten in den ersten Fraktionen ins Destillat geht, kann über den Einsatz von Säuren und Laugen die Flüchtigkeit von Phenol und Anilin aktiv gesteuert werden:
- Wird zunächst pH-angepasst sauer destilliert und in der letzten Fraktion die Vorlage alkalisch gestellt, kann in der letzten Fraktion selektiv Anilin nachgewiesen werden. Toluol und Phenol gingen bereits in den ersten Fraktionen aus der Vorlage in die Dampfphase.
- Wird zunächst pH-angepasst alkalisch destilliert und in der letzten Fraktion die Vorlage sauer gestellt, kann in der letzten Fraktion selektiv Phenol nachgewiesen werden.

Mittels der pH-angepassten fraktionierten_kann sowohl die Nachweisgrenze von Verbindungen verbessert, als auch die Selektivität der Detektion verbessert werden.

Nach Destillation und nachfolgender Kondensation wird das Kondensat in einem Sammler 11 gesammelt und mittels einer Pumpe 11a über eine Leitung in eine Anreichungseinrichtung 20 transportiert. Dort werden die Konzentrationen der Spurenstoffe im Kondensat weiter erhöht. Mittels der Anreicherungseinrichtung 20 und der Konzentriereinrichung 19 kann insgesamt die Konzentration der Spurenstoffe um beispielsweise einen Faktor 50, 100 oder bis zu 10.000 erhöht werden, was die nachfolgende Analyse derselben wesentlich erleichtert. Über eine Leitung 21 kann Abfall der Anreicherungseinrichtung 20 entfernt werden.

Im Einzelnen ist die Anreicherungseinrichtung insbesondere ausgebildet, die folgenden Schritte durchzuführen:
1. Extraktion der organischen Verbindungen aus dem Destillat an dem Festphasenextraktionsmaterial durch langsames Pumpen der Probe über eine Festphasenextraktions-Kartusche.
2. Trocknen der Kartusche mit Luft und/oder Stickstoff.
3. Elution der adsorbierten organischen Verbindungen mit einem Lösungsmittel o.ä.
4. Auffangen des Eluats, z.B. 1 mL bis 2 mL, homogenisieren, temperieren und überführen in die Langweg-Küvette 14 zur Spektralanalyse.

Nach Aufnahme des Spektrums:
5. Erneutes ausreichendes Spülen der Festphasenextraktions-Kartusche mit Lösungsmittel o.ä. zur vollständigen Wiederherstellung definierter Ausgangsbedingungen. Mit anderen Worten alle adsorbierten Verbindungen sind vollständig vom Festphasenextraktions-Material wieder entfernt.

Das Auswaschen ist ggf. ein exponentieller Prozess. Im Sinne einer möglichst hohen Konzentration (d. h. wenige mL des Lösungsmittels) kann auf letzte Spuren der Elution verzichtet werden. Diese müssen aber vor erneuter Beladung mit destilliertem Wasser zuvor wieder entfernt werden.

Für gewisse organische Verbindungen kann eine spezielle Elution, d.h. nicht nur mit Lösungsmitteln von einem speziellen Festphasenextraktions-Material mehr Spezifizität ermöglichen: Bei der Destillation über Säuren oder Basen wird die Flüchtigkeit von Verbindungen beeinflusst, z.B. Phenol im Sauren, Anilin im Basischen. Es kann dann über ähnliche Mechanismen auch bei Festphasenextraktions-Materialien eine Anreicherung erfolgen, z.B. mit stark oder schwach sauren oder basischen lonentauschern. Tritt bei einem Festphasenextraktions-Material eine ionische Wechselwirkung auf, kann die Elution ggf. über eine saure oder basische wässrige Lösung erfolgen. Über die pH-Änderung verlieren dann z.B. die organischen Moleküle ihre Wechselwirkung mit dem Festphasenextraktions-Material und werden eluiert.

Unter anderem werden mittels Festphasenextraktion basierend auf Lösungsmitteln folgende Vorteile erzielt:
- Es gibt eine Vielzahl an Festphasenmaterialien und hochreinen org. Lösungsmitteln, die in sehr guter und reproduzierbarer Qualität geliefert werden.
- Über die Lösungsmittel, z.B. 100 % Methanol werden die Anreicherungseinrichtung und die nachfolgende Küvette 14 effektiv gespült und desinfiziert. Aus diesem Grund wird eine gute Langzeitstabilität ermöglicht; es erfolgen keine Ablagerungen von organischen Verbindungen oder Verkeimungen.

Alternativ oder zusätzlich kann die Anreicherungseinrichtung insbesondere auch ausgebildet sein, die folgenden Schritte für eine Hochtemperatur-Flüssigkeitschromatographie - High-Temperatur-Liquid-Chromatography HTLC - durchzuführen:
1. Das Destillat wird über eine Festphasenextraktions-Kartusche mit hitzestabilem Material und hitzestabilem Aufbau gegeben. Die organischen Komponenten reichern sich zumindest teilweise an der Festphase an.
2. Nach dem Durchlaufen der definierten Wassermenge wird die Anreicherungssäule auf z.B. 150°C gebracht. Der nötige Gegendruck liegt hier bei ca. 10 bar (bei 200°C bei ca. 20 bar). Er muss realisiert werden, dass das Wasser nicht zu Kochen beginnt.
3. Ist eine homogene Temperatur in der Säule erreicht, wird mit weiterem Destillat (z.B. 1 mL bis 2 mL) die Festphasenextraktions-Kartusche eluiert. Dabei lösen sich die organischen Verbindungen wieder vom Festphasenextraktions-Material, weil Wasser unter diesen Bedingungen ähnliche Eigenschaften wie Methanol bei Normaltemperatur aufweist. Als Alternative könnte auch mit einer Lösungsmittel-Wasser-Mischung eluiert werden, was die Elutionskraft nochmals vergrößert.
4. Das Eluat mit den angereicherten Verbindungen wird nach Homogenisierung und Temperierung in die Küvette 14 geleitet.

Nach Aufnahme des Spektrums:
5. Im heißen Zustand wird die Festphasenextraktions-Kartusche mit weiterem Wasser oder Lösungsmittel-Wasser-Gemisch durchflossen und für die nächste Anreichung konditioniert.

Alternativ kann die Anreichungseinrichtung aus ausgebildet sein, eine temperaturgestufte Elution bereitzustellen, d.h. es wird eine Temperaturrampe der Elution gefahren. Dieser kann insbesondere die folgenden Schritte umfassen:
a) Anreicherung des Destillats bei Raumtemperatur
b) Temperierung der Festphasenextraktions-Kartusche auf T₁ = 100 °C + Elution, d.h. es werden locker gebundene Verbindungen eluiert
c) Temperierung auf T₂ = 200 °C + Elution, d.h. es werden alle restlichen Verbindungen eluiert.

Einer der Vorteile ist, dass die Spezifität erhöht werden kann. Dies kann genutzt werden, falls z.B. im Spektrum die Adsorptionskurven nicht eindeutig unterschieden werden können.

Das angereicherte Kondensat wird über eine Leitung 12 von der Anreicherungseinrichtung 20 zu einer Küvette 14 transportiert. Die Küvette 14 ist insbesondere als optische Flüssigkeits-Hohlleiter-Kapillarzelle ausgebildet und wird längs ihrer Achse mit Licht einer Lichtquelle 13 durchstrahlt. Als Flüssigkeits-Hohlleiter-Kapillarzellen werden insbesondere faseroptische Durchflusszellen bezeichnet, die eine erhöhte optische Weglänge insbesondere zwischen 10 cm und 50 cm bei gleichzeitig kleinen benötigten Probenvolumina zwischen ca. 2 Mikroliter und ca. 3 Milliliter aufweisen. Die Flüssigkeits-Hohlleiter-Kapillarzelle besteht hier unter anderem aus einem Quarzglasrohr, welches auf der Außenseite mit einem Polymer beschichtet ist. Das Polymer hat einen niedrigeren Brechungsindex als Wasser, was die Intensität des Lichts auf einem nachfolgend genannten Detektor erhöht. Es können damit größere Messstrecken realisiert werden, was die Messgenauigkeit erhöht. Auf der Innenseite ist das Quarzglasrohr mit einer hydrophilen Beschichtung, insbesondere mittels Nanopartikeln versehen, was den Durchfluss erhöht und der Bildung von Luftblasen entgegenwirkt, sodass die Zuverlässigkeit einer Messung erhöht wird.

Auf der der Lichtquelle 13 gegenüberliegende Seiten der Küvette 14 wird das aus der Küvette 14 austretende Licht wellenlängenspezifisch, beispielsweise mittels eines Prismas 15 oder eines optischen Gitters aufgespalten. Letzteres ermöglicht eine höhere Auflösung. Das so aufgespaltene Licht wird auf einen Detektor 16 geleitet, der mit einer Ermittlungseinrichtung 4 verbunden ist. Die Ermittlungseinrichtung 4 vergleicht dann das mittels des Detektors 16 aufgenommene Spektrum der Probe in der Küvette 14 mit in der Ermittlungseinrichtung 4 hinterlegten Referenzspektren für die jeweiligen zu analysierenden Fremdstoffe und kann diese die ermittelten Fremdstoffe dann gegebenenfalls einem Benutzer der Vorrichtung signalisieren oder anzeigen.

Gleichzeitig kann die Ermittlungseinrichtung 4 ebenfalls mit einer Steuerungseinrichtung 17 verbunden sein. Die Steuerungseinrichtung 17 dient zur Steuerung der Vorrichtung 1 und ist insbesondere wie in Fig. 1 gezeigt mit den jeweiligen Pumpen 5a, 6a, 7a und 11a verbunden, ebenso wie mit der Ermittlungseinrichtung 4. Die Steuerungseinrichtung 17 ermöglicht dann einen automatisieren Ablauf, indem beispielsweise zunächst die Pumpe 5a betätigt wird, über eine weitere in Fig. 1 nicht gezeigte Vorrichtung der pH-Wert der entnommenen Probe eingestellt, indem gegebenenfalls entsprechend Hilfsmittel, bspw. eine Säure oder Lauge über die Hilfsmittelpumpe 6a zugeführt wird. Anschließend wird mittels der Steuerungseinrichtung 17 die Heizung 7 betätigt und ein Teil der entnommenen Probe des flüssigen Mediums M in dem Behälter 8 entsprechend verdampft. Die Steuerungseinrichtung 17 kann ebenfalls über entsprechende Sensoren im Sammler 11 ermitteln, ob bzw. inwieweit genügend Kondensat bzw. Destillat erzeugt wurde. Ist genügend Destillat im Sammler 11 vorhanden, wird mittels der Steuerungseinrichtung 17 die Heizung 7 abgeschaltet und mittels der Pumpe 11a und der Leitung 12 das Destillat in die Anreicherungseinrichtung 19 und anschließend in die Küvette 14 gefördert. Die Steuerungseinrichtung 17 steuert dann die Ermittlungseinrichtung 4, welche wiederum die Lichtquelle 13 und den Detektor 16 betätigt. Hat der Detektor 16 ein entsprechendes Spektrum des in der Küvette 14 befindlichen destillierten Anteils der entnommenen Probe aufgenommen, übermittelt er dieses an die Ermittlungseinrichtung 4, die wiederum die Detektion bzw. Ermittlung der Spurenstoffe vornimmt. Ist das Ergebnis nicht eindeutig oder mit zu vielen Fehlern behaftet, kann die Ermittlungseinrichtung 4 ein entsprechendes Signal an die Steuerungseinrichtung 17 übermitteln, welche dann erneut eine Probe aus der Abwasserleitung AL entnehmen kann. Vorher wird jedoch der nicht verdampfte Teil der Probe des Abwassers in dem Behälter 8 mittels Betätigung der Pumpe 7a über die Steuerungseinrichtung 17 entleert. Für eine neue Ermittlung kann die Steuerungseinrichtung 17 ebenfalls das Leitungssystem der Vorrichtung 1 ganz oder teilweise mit einer vordefinierten Flüssigkeit, beispielsweise destilliertem Wasser spülen, um Reste verbliebener Fremdstoffe zu entfernen, um eine zuverlässige Messung von weiteren Proben zu gewährleisten. Die Steuerungseinrichtung 17 ermittelt dann auf der Basis der ermittelten Spurenstoffe bzw. deren Konzentrationen im Abwasser eine entsprechende Menge an Aktivkohle, die zur Bindung der Spurenstoffe erforderlich ist, um so das Abwasser von diesen zu säubern.

In Abhängigkeit der ermittelten Konzentrationen der Spurenstoffe steuert also die Steuereinrichtung 17 eine Aktivkohlezuführeinrichtung 22, die mit einem Aktivkohlevorrat verbunden ist. Die Aktivkohlezuführeinrichtung 22 fördert dann entsprechend der ermittelten Menge an Aktivkohle für die ermittelten Spurenstoffe Aktivkohle in die entsprechende Abwasserleitung oder direkt in das Abwasserbecken einer Kläranlage

Um die Wirksamkeit der zugegebenen Menge Aktivkohle zu überprüfen, kann am Auslass des Abwasserbeckens oder stromabwärts in der Abwasserleitung eine Überwachungseinrichtung angeordnet sein. Diese ist ausgebildet, erneut die Konzentration von Spurenstoffen zu messen. Das entsprechende Ergebnis kann dann an die Analyseeinrichtung übermittelt werden, welche dann anhand eines Korrekturalgorithmus bspw. die ermittelte Menge an zuzugebender Aktivkohle korrigiert. Mit anderen Worten kann so ein selbstlernendes System für die genaue Ermittlung zuzugebender Mengen an Reinigungsmitteln bereitgestellt werden, welches eine Verifikation des Reinigungsprozesses ermöglicht. Die Überwachungseinrichtung kann die ermittelten Werte an eine Anzeigeeinrichtung übermitteln, sodass ein Benutzer eine Rückmeldung über insbesondere die Effizienz des Reinigungsverfahrens erhält. Dies kann beispielsweise auf einem Bildschirm oder ähnlichem ausgegeben werden. Ebenso können die rückgemeldeten Werte bzw. die Auswertung der Wirksamkeit über die Zeit gemessen und wiederum ausgewertet werden, um langfristige Änderungen in der Konzentration der Spurenstoffe im Abwasser zu erhalten.

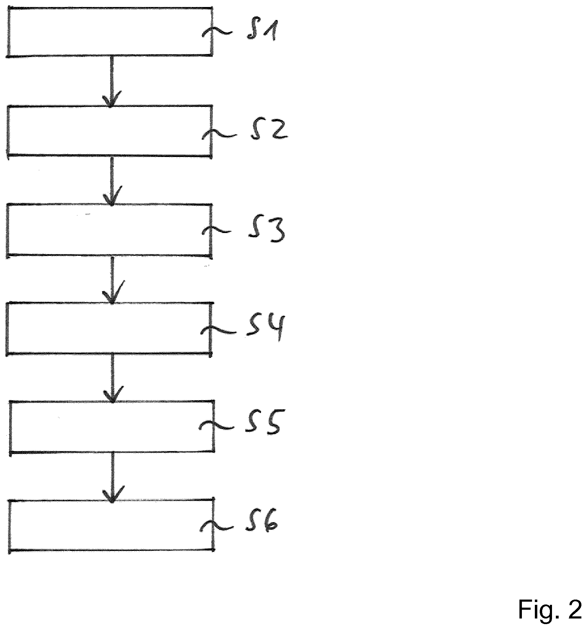

Fig. 2 zeigt Schritte eines Verfahrens gemäß einer zweiten Ausführungsform der vorliegenden Erfindung.

In Fig. 2 bezeichnet Bezugszeichen S1 den Schritt: Entnehmen einer Probe, Bezugszeichen S2 den Schritt: Aufkonzentrierung der Fremdstoffe, Bezugszeichen S3 den Schritt: Analysieren des erhaltenen Kondensats mittels UV/VIS-Spektroskopie, wobei das Analysieren die folgenden Schritte umfasst: Anregen des Kondensats mit Licht, insbesondere eines Lasers, einer Xenonlampe oder einer Deuteriumlampe, mit zumindest einer Anregungswellenlänge, und Aufnehmen zumindest eines Absorptionsspektrums des durch das Kondensat transmittierten Lichts mittels eines Detektors, Bezugszeichen S4 den Schritt: Anreichung der Fremdstoffe, Bezugszeichen S5 den Schritt: Ermitteln von zumindest einem der Fremdstoffe in dem analysierten Kondensat anhand zumindest eines der aufgenommenen Absorptionsspektren, und Bezugszeichen S6 den optionalen Schritt: Ermitteln einer Menge von zuzugebender Aktivkohle und Zugeben der Aktivkohle.

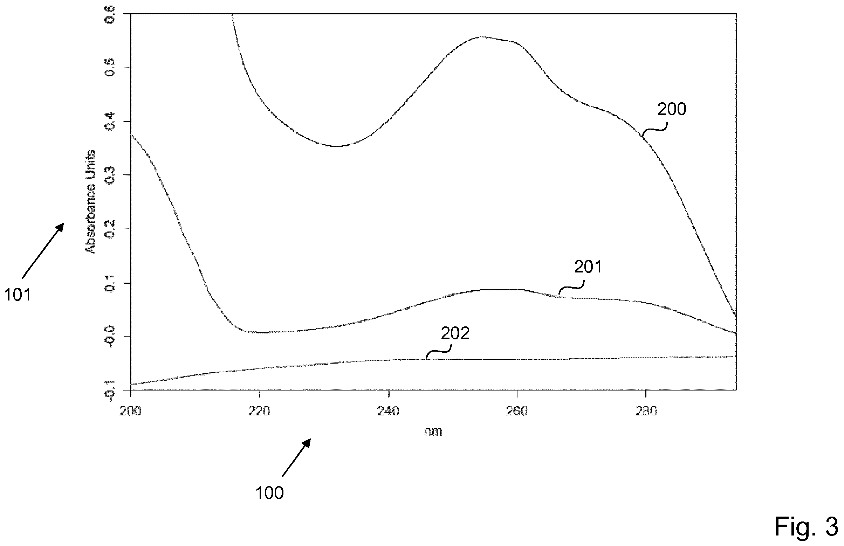

Fig. 3 zeigt Absorptionsspektren von Benzotriazol in doppelt destilliertem Wasser.

In Fig. 3 sind Absorptionsspektren mit verschiedenen Konzentrationen von Benzotriazol gezeigt. Die Wellenlänge der aufgenommenen Absorptionsspektren erstreckt sich dabei zwischen 200 nm und 300 nm auf der horizontalen Achse 100. Auf der vertikalen Achse 101 ist die Extinktion in Absorptionseinheiten im Wesentlichen zwischen -0,1 und 0,6 AU (willkürliche Einheiten) angegeben. Der Kurvenverlauf 201 zeigt 50 Mikrogramm/Liter Benzotriazol in doppelt destilliertem Wasser gemessen in der optischen Messzelle 14. Die Kurve 202 zeigt eine Vermessung des Destillats von einem Aufkonzentrierungsvorgang und Kurve 200 zeigt 6-fach aufkonzentriertes Benzotriazol. Man erkennt deutlich die wesentlich stärkeren Ausprägungen im Kurvenverlauf bei entsprechend hoher Aufkonzentration, was eine spätere Identifizierung und Konzentrationsbestimmung vereinfacht.

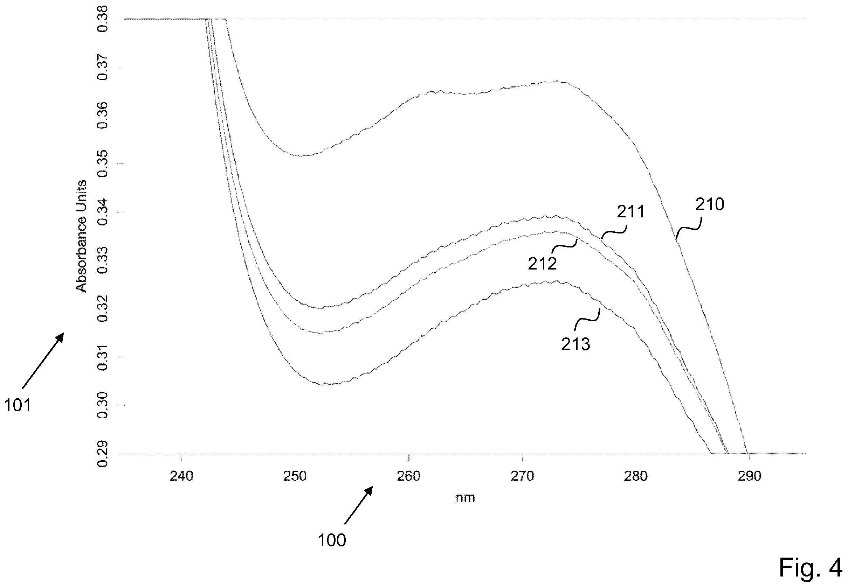

Fig. 4 zeigt einen Teil von Schritten gemäß einer Ausführungsform der vorliegenden Erfindung.

In Fig. 4 sind verschiedene Absorptionsspektren von Benzotriazol gezeigt. Die Wellenlänge der Absorptionsspektren erstreckt sich dabei zwischen 200 nm und 300 nm auf der horizontalen Achse 100. Auf der vertikalen Achse 101 ist die Extinktion in Absorptionseinheiten im Wesentlichen zwischen 0,29 und 0,38 angegeben.

Im Detail zeigt die Kurve 210 ein Absorptionsspektrum von Benzotriazol mit unbekannter Benzotriazolkonzentration in Abwasser. Um nun die Konzentration zu bestimmen, werden die folgenden Schritte durchgeführt. Zunächst wird das Absorptionsspektrum auf charakteristische Peaks oder Verläufe in bestimmten Wellenlängenbereichen überprüft. Die Kurve 210 weist dabei unter anderem einen charakteristischen Peak bei ca. 263nm auf. Die Kurve 210 wird nun mit einem Referenzspektrum von Benzotriazol bei einer bekannten Konzentration, hier bei einer Konzentration von 20 Mikrogramm/Liter verglichen. Anschließend wird die Differenz der beiden Spektren gebildet und die Kurve 211 erhalten. Anschließend wird überprüft wie signifikant der ursprüngliche Peak noch im Absorptionsspektrum hervortritt. In Fig. 4 ist der Peak nahezu, allerdings nicht vollständig, verschwunden.

Es wird nun die Kurve 210 erneut mit einem Referenzspektrum von Benzotriazol bei einer bekannten Konzentration, hier bei einer Konzentration von 26 Mikrogramm/ Liter verglichen. Anschließend bildet man die Differenz der beiden Spektren und erhält die Kurve 212. Anschließend wird überprüft wie signifikant der ursprüngliche Peak noch im Differenz-Absorptionsspektrum, also der Kurve 212 hervortritt. Wie man erkennt, ist der Peak fast vollständig verschwunden.

Es wird nun die Kurve 210 erneut mit einem Referenzspektrum von Benzotriazol bei einer bekannten Konzentration, hier bei einer Konzentration von 30 Mikrogramm/ Liter verglichen. Anschließend wird die Differenz der beiden Spektren gebildet und die Kurve 213 erhalten. Anschließend wird überprüft wie signifikant der ursprüngliche Peak noch im Differenz-Absorptionsspektrum, also der Kurve 213 hervortrittln Fig. 4 ist der Peak nun vollständig verschwunden.

Damit bestimmt sich nun die Konzentration von Benzotriazol auf 30 Mikrogramm/ Liter im Abwasser.

Zur Bestimmung eines weiteren Spurenstoffs, hier Diclofenac, welches in niedrigerer Konzentration vorliegt, wird zunächst die Kurve 212, die zur Bestimmung des höher konzentrierten Benzotriazol herangezogen wurde, verstärkt und dann diese als Basis für die oben beschriebenen Schritte verwendet. Hierbei ist ein charakteristischer Verlauf der Kurve 210 im Bereich von 275 nm Wellenlänge zur Bestimmung von Diclofenac relevant.

Mit anderen Worten werden hierdurch sukzessive im ursprünglichen Absorptionsspektrum die Spurenstoffe einzeln mathematisch eliminiert.

Zusammenfassend weist die vorliegende Erfindung mehrere Vorteile auf: Zum einen ist das Verfahren bzw. die Vorrichtung kostengünstig und mit einer hohen Genauigkeit für die Erkennung bzw. Detektion von Spurenstoffen in Abwässern durchführbar bzw. herstellbar. Darüber hinaus kann mit der Erfindung eine Vielzahl möglicher Spurenstoffen in Abwässern zuverlässig detektiert und ihre Konzentration bestimmt werden. Schließlich bietet die vorliegende Erfindung den Vorteil, dass das Verfahren automatisiert ablaufen kann und gleichzeitig der personelle und zeitliche Kostenaufwand wesentlich gesenkt wird. Die Zuverlässigkeit der Überwachung von Spurenstoffen in Abwässern kann dadurch wesentlich erhöht werden.

Anstelle der Anreicherung der Fremdstoffe mittels Destillation ist ebenfalls eine Anreicherung der jeweiligen Fremdstoffe im flüssigen Medium mittels Festphasenextraktion, Flüssig-Flüssig-Extraktion, mittels Membranfiltration, insbesondere in Form einer Nanofiltration und/oder mittels Ionenaustauschern möglich. Diese Techniken können zusammen mit der Destillation alternativ oder zusätzlich zu dieser zur Verbesserung der Probenvorbereitung verwendet werden.

Zur weiteren Verbesserung der Probenvorbereitung bzw. Aufbereitung kann die Probe zusätzlich entgast werden. Darüber hinaus kann die Analyseeinrichtung 3 ebenfalls eine Heizeinrichtung und entsprechende Sensoren umfassen, so dass alle Komponenten bzw. Bauteile der Analyseeinrichtung 3 auf derselben Temperatur gehalten werden, was die Ermittlung der Spurenstoffe in Abwässern weiter verbessert. Darüber hinaus können regelmäßig sogenannte Nullmessungen durchgeführt werden, so dass die Vorrichtung automatisiert kalibriert werden kann und ein Driften in der Sensorik bzw. kleinste Temperaturschwankungen, etc. ausgeschlossen bzw. minimiert werden können.

Wird das Ermitteln der Spurenstoffe in Abwässern mittels aufgenommener Spektren und Referenzspektren vorgenommen, kann in der Ermittlungseinrichtung eine entsprechende Datenbank für die Spektren in Form von entsprechenden UV/-VIS-Spektren und/oder Fluoreszenz-Spektren mit jeweils verschiedenen Konzentrationen hinterlegt werden. Die Referenzspektren können dann beispielsweise in einer rein wässrigen Lösung gemessen werden und insbesondere mittels eines Zusatzes eines Puffers neutrale pH-Bedingungen für die Messung geschaffen werden.

Obwohl die vorliegende Erfindung vorstehend anhand bevorzugter Ausführungsbeispiele beschrieben wurde, ist sie nicht darauf beschränkt, sondern auf vielfältige Weise modifizierbar.

### Bezugszeichenliste

- 1: Vorrichtung zur Detektion von Fremdstoffen in Wasser
- 2: Aufbereitungseinrichtung
- 3: Analyseeinrichtung
- 4: Ermittlungseinrichtung
- 5: Entnahmeeinrichtung
- 5a: Pumpe
- 6: Hilfsmittelreservoir
- 6a: Pumpe
- 7: Heizung
- 7a: Pumpe
- 8: Behälter
- 9: Leitung
- 10: Kühler
- 11: Sammler
- 11a: Pumpe
- 12: Leitung
- 13: Lichtquelle
- 14: Küvette
- 15: Prisma
- 16: Detektor
- 17: Steuerungseinrichtung
- 18: Ablass
- 19: Konzentriereinrichtung
- 20: Anreicherungseinrichtung
- 21: Leitung Abfall
- 22: Aktivkohlezugabeeinrichtung
- 23: Aktivkohlevorrat
- M: Abwasser
- M1: Abwasser flüssige Phase
- M2: Abwasser Gasphase
- AL: Abwasserleitung

## Patentansprüche

1. Verfahren zur Detektion von Fremdstoffen, insbesondere von anthropogenen Spurenstoffen, in einem flüssigen Medium, insbesondere in Abwasser,
umfassend die Schritte
- Entnehmen einer Probe
- Zumindest teilweise Destillation der Probe,
- Analysieren des erhaltenen Kondensats mittels UV/VIS-Spektroskopie, wobei das Analysieren die folgenden Schritte umfasst:
∘ Anregen des Kondensats mit Licht, insbesondere eines Lasers, einer Xenonlampe oder einer Deuteriumlampe, mit zumindest einer Anregungswellenlänge, und
∘ Aufnehmen zumindest eines Absorptionsspektrums des durch das Kondensat transmittierten Lichts und/oder zumindest eines Fluoreszenzspektrums von remittiertem Licht des Kondensats mittels eines Detektors,
- Ermitteln von zumindest einem der Fremdstoffe in dem analysierten Kondensat anhand zumindest eines der aufgenommenen Spektren, **dadurch gekennzeichnet, dass** vor dem Analysieren des Kondensats eine Aufkonzentrierung der Fremdstoffe und/oder eine weitere Anreichung der Fremdstoffe in der Probe erfolgt, insbesondere wobei das Ermitteln von zumindest einem der Fremdstoffe die Verwendung von Multivariaten Kalibrationsmethoden, chemometrischen Methoden und/oder einen Vergleich der aufgenommenen Spektren mit Referenzspektren umfasst, insbesondere wobei die multivariate Kalibration mittels der Teilweisen-Kleinste-Quadrate-Regression durchgeführt wird.

2. Verfahren gemäß Anspruch 1, **dadurch gekennzeichnet, dass** das Ermitteln von zumindest einem der Fremdstoffe die folgenden Schritte umfasst:
a) Identifizieren zumindest eines der Fremdstoffe anhand seines Absorptions- und/oder Fluoreszenzspektrums
b) Identifizieren von zumindest einem für den Fremdstoff charakteristischen Wellenlängenabschnitt im Absorptions- und/oder Fluoreszenzspektrum,
c) Minimieren der Differenz der Absorptionswerte und/oder Intensitätswerte von identifiziertem Wellenlängenabschnitt und Absorptionswerten und/oder Intensitätswerten im gleichen Wellenlängenabschnitt im Referenzspektrum für unterschiedliche Konzentrationen des Fremdstoffs,
insbesondere wobei zum Ermitteln eines zweiten Fremdstoffs die Schritte a)-c) erneut durchgeführt werden, wobei in den Schritten b) und c) das um die Absorptions- und/oder Intensitätswerte des ersten identifizierten Fremdstoff bereinigte Absorptions- und/oder Fluoreszenzspektrum verwendet wird.

3. Verfahren gemäß einem der Ansprüche 1-2, **dadurch gekennzeichnet, dass** die Destillation in Form einer Vakuum-Destillation oder einer Überdruck-Destillation durchgeführt wird.

4. Verfahren gemäß einem der Ansprüche 1-3, **dadurch gekennzeichnet, dass** die Aufkonzentrierung durch Entfernen von Wasser aus der Probe, insbesondere durch Verdampfen von Wasser erfolgt.

5. Verfahren gemäß einem der Ansprüche 1-4, **dadurch gekennzeichnet, dass** die Anreichung der Fremdstoffe mittels Lösungsmittel basierter Festphasenextraktion erfolgt und/oder dass die Anreichung der Fremdstoffe mittels Festphasenextraktion mit subkritischem Wasser erfolgt und/oder dass die Anreicherung mittels einer temperaturgestuften Festphasenextraktion erfolgt.

6. Verfahren gemäß einem der Ansprüche 1-5, **dadurch gekennzeichnet, dass** die Aufkonzentrierung vor und/oder die Anreichung nach der zumindest teilweisen Destillation erfolgt.

7. Verfahren gemäß einem der Ansprüche 1-6, **dadurch gekennzeichnet, dass** zum Analysieren des Kondensats eine Flüssigkeits-Hohlleiter-Kapillarzelle verwendet wird, insbesondere wobei die Flüssigkeits-Hohlleiter-Kapillarzelle auf ihrer Innenseite mit einer hydrophilen Schicht versehen ist.

8. Verfahren gemäß einem der Ansprüche 1-7, **dadurch gekennzeichnet, dass** das Absorptions- und/oder Fluoreszenzspektrum in einem Wellenlängenbereich zwischen 50 nm und 1500 nm, vorzugsweise zwischen 100 nm und 1200 nm, insbesondere zwischen 200 nm und 1050 nm, besonders vorzugsweise zwischen 200 nm und 400 nm aufgenommen wird.

9. Verfahren gemäß einem der Ansprüche 1-8, **dadurch gekennzeichnet, dass** die Anregung des Kondensats in einem Wellenlängenbereich zwischen 50nm und 600nm, insbesondere zwischen 100nm und 500nm, vorzugsweise zwischen 150nm und 400nm erfolgt.

10. Verfahren gemäß einem der Ansprüche 1-9, **dadurch gekennzeichnet, dass** die Destillation der Probe mittels fraktionierter Destillation durchgeführt wird, insbesondere wobei die fraktionierte Destillation pH-angepasst durchgeführt wird.

11. Vorrichtung zur Detektion von Fremdstoffen, insbesondere von anthropogenen Spurenstoffen, in einem flüssigen Medium, insbesondere in Abwasser, umfassend
eine Destillationseinrichtung zum zumindest teilweisen Destillieren einer Probe umfasst,
eine Analysiereinrichtung zum Analysieren des erhaltenen Kondensats mittels UV/VIS-Spektroskopie, wobei die Analysiereinrichtung zumindest eine Lichtquelle, insbesondere einen Laser, eine Xenonlampe oder einer Deuteriumlampe, zum Anregen des Kondensats mit Licht mit zumindest einer Anregungswellenlänge umfasst und einen Detektor zum Aufnehmen zumindest eines Absorptionsspektrums des durch das Kondensat transmittierten Lichts und/oder zumindest eines Fluoreszenzspektrums von remittiertem Licht des Kondensats, sowie
eine Ermittlungseinrichtung zum Ermitteln zumindest eines der Fremdstoffe in dem Kondensat anhand zumindest eines der aufgenommenen Spektren und weiter
eine Aufkonzentriereinrichtung zur Aufkonzentrierung der Fremdstoffe in der Probe und/oder
eine Anreichungseinrichtung zur weiteren Anreichung der Fremdstoffe in der Probe erfolgt, insbesondere wobei eine Entnahmeeinrichtung zum Entnehmen einer Probe aus dem zu untersuchenden Medium angeordnet ist.

12. Vorrichtung gemäß Anspruch 11, **dadurch gekennzeichnet, dass** eine Hilfsmittelzusetzeinrichtung zum Säuern, Alkalisieren, Neutralisieren der Probe und/oder zum Hinzufügen von Komplexbildnern und/oder zur Derivatisierung angeordnet ist.

13. Vorrichtung gemäß einem der Ansprüche 11-12, **dadurch gekennzeichnet, dass** die Analyseeinrichtung eine optische Messzelle umfasst, welche in Form einer eine Flüssigkeits-Hohlleiter-Kapillarzelle ausgebildet ist, insbesondere wobei die Flüssigkeits-Hohlleiter-Kapillarzelle auf ihrer Innenseite mit einer hydrophilen Schicht versehen ist, insbesondere wobei die Flüssigkeits-Hohlleiter-Kapillarzelle ein Glasrohr, insbesondere ein Quarzglasrohr aufweist, welches auf der Außenseite mit einem Polymer beschichtet ist, wobei das Polymer einen niedrigeren Brechungsindex als Wasser aufweist, vorzugsweise wobei die optische Messzelle aus Quarz und/oder Edelstahl hergestellt ist.

14. Verfahren zur kontinuierlichen Reinigung von Abwässern, insbesondere in Klärwerken, umfassend die zumindest zeitweise kontinuierlich durchgeführten Schritte
- Durchführen eines Verfahrens gemäß einem der Ansprüche 1-15 zur Bestimmung der Konzentration von einem oder mehreren Fremdstoffen,
- Ermitteln des jeweiligen Bedarfs eines Reinigungsmittels, insbesondere in Form eines Adsorptionsmittels, vorzugsweise Aktivkohle und/oder in Form eines Oxidationsmittels, vorzugsweise Ozon, für den jeweiligen Fremdstoff,
- Zuführen der ermittelten Menge des Absorptionsstoffs,
vorzugsweise wobei die Schritte regelmäßig, insbesondere stündlich, vorzugsweise halbstündlich, insbesondere viertelstündlich durchgeführt werden.

15. Vorrichtung zur kontinuierlichen Reinigung von Abwässern, insbesondere in Klärwerken, umfassend
- eine Detektionseinrichtung zur Detektion von Fremdstoffen, insbesondere von anthropogenen Spurenstoffen, in einem flüssigen Medium, insbesondere in Abwasser gemäß einem der Ansprüche 11-13,
- eine Reinigungsmittelbereitstellungseinrichtung zur Bereitstellung eines Reinigungsmittels für einen oder mehrere Fremdstoffe,
- eine Auswerteeinrichtung, die mit der Detektionseinrichtung verbunden ist, zum kontinuierlichen Ermitteln des jeweiligen Bedarfs des Reinigungsmittels, insbesondere in Form eines Adsorptionsmittels, vorzugsweise Aktivkohle und/oder in Form eines Oxidationsmittels, vorzugsweise Ozon, für den jeweiligen Fremdstoff,
- eine Zuführeinrichtung zum Zuführen der ermittelten Menge des Reinigungsmittels zum Abwasser und
- eine Steuereinrichtung, die mit der Auswerteeinrichtung verbunden ist und die ausgebildet ist, den ermittelten Bedarf an Reinigungsmittel aus der Reinigungsmittelbereitstellungseinrichtung mittels der Zuführeinrichtung dem Abwasser zuzuführen.
